# DEMANDE DE BREVET EUROPEEN

(11) **EP 1 521 475 A1**
(43) Date de publication de la demande: **06.04.2005**
(21) Numéro de dépôt: 04290151.2
(22) Date de dépôt: 20.01.2004
(51) Int. Cl.: H04N 7/24, H04N 7/50

(54) **Procédé et dispositif de traitement de flux de données codées**

(71) Demandeur: FRANCE TELECOM, 75015 Paris (FR)
(72) Inventeur: Relier, Stéphanie, 35410 Domloup (FR); Curet, Dominique, 35700 Rennes (FR); Berthelot, Bertrand, 35700 Rennes (FR); Veillard, Michel, 35170 Bruz (FR)
(74) Mandataire: Saint-Marc, Christophe Andréas

(57) **Abrégé**

L'invention concerne un procédé de traitement d'un flux de données audiovisuelles, le flux de données étant constitué à partir de groupes de données, un groupe de données étant composé d'une suite de sous-groupes de données, un sous-groupe de données comprenant des informations représentatives du type de données comprises dans le sous-groupe de données, dans lequel on recherche, parmi les sous-groupes de données d'un groupe de données, un type prédéterminé de données comprises dans un sous-groupe de données, le type prédéterminé de données étant représentatif d'un début d'image ou d'un début de séquence d'images et on associe (E402, E403, E405), au groupe de données, un code prédéterminé représentatif du type prédéterminé de données présentes dans un sous-groupe de données du groupe de données. L'invention concerne aussi le dispositif de traitement associé.

## Description

La présente invention concerne un procédé et un dispositif de traitement de flux de données codées.

Elle concerne plus précisément un procédé et un dispositif d'insertion de codes prédéterminés dans un flux de données ainsi qu'un procédé et un dispositif de détection et de traitement de codes prédéterminés insérés dans un flux de données.

L'invention se situe dans le domaine du traitement de flux de données multimédia et plus particulièrement dans le domaine de la distribution de services audiovisuels tels que la télévision numérique ou la vidéo à la demande sur différents réseaux de télécommunication.

Est connue l'encapsulation de données audiovisuelles codées conformément aux standards MPEG-2 vidéo référencé ISO/IEC International Standard 13818-2 ou MPEG-2 audio référencé ISO/IEC International Standard 13818-3 ou MPEG-4 vidéo référencé ISO/IEC International Standard 14496-2 ou MPEG-4 audio référencé ISO/IEC International Standard 14496-3 dans un multiplex de type ISO/IEC International Standard 13818-1 : Information Technology- Generic coding of moving pictures and audio ― Part 1 : Systems.

Le standard de compression de données audiovisuelles défini par le comité ISO/MPEG référencé sous la dénomination ISO/IEC International Standard 14496-10 : Information Technology ― Coding of audio-visual objects ― Part 10 ; Advanced Video coding, permet une compression du flux vidéo beaucoup plus efficace que le standard MPEG-2 ISO/IEC International Standard 13818-2 Ce standard est classiquement appelé MPEG-4 AVC ou encore H.264.

Le standard « ISO/IEC International Standard 13818-1/FDAM3 : Transport of AVC video Data over ISO/IEC 13818-1 streams » en cours de définition au sein du comité ISO/MPEG a pour but de faire évoluer le standard ISO/IEC 13818-1 et décrit le transport de flux de données codées selon le standard IS0/IEC International Standard 14496-10 dans un multiplex conforme au standard ISO/IEC International Standard 13818-1.

Ce nouveau standard optimise la transmission du flux de données sur des réseaux de télécommunication en tirant partie des particularités et avantages du standard IS0/IEC International Standard 14496-10.

Aujourd'hui, les diffuseurs de contenus audiovisuels, les dispositifs de brouillage de contenus audiovisuels ainsi que les systèmes de vidéo à la demande traitent des flux de données conformes au standard actuel ISO/IEC International Standard 13818-1.

Plus précisément, les équipements employés aujourd'hui utilisent des codes de déclenchement définis dans le standard ISO/IEC International Standard 13818-2 pour se synchroniser dans la vidéo MPEG-2. Ces codes de déclenchement sont par exemple utilisés lorsque le flux de données est crypté ou doit être diffusé à la demande d'un client en réponse à des commandes telles que celles qui sont classiquement proposées dans les magnétoscopes.

Lorsque le nouveau standard ISO/IEC International Standard 14496-10 sera déployé, les équipements conformes au standard ISO/IEC International Standard 13818-1 utilisant les codes de déclenchement définis dans le standard ISO/IEC International Standard 13818-2 ne seront plus aptes à fonctionner avec le nouveau standard et de nombreuses et coûteuses modifications devront être effectuées au niveau des diffuseurs de contenus audiovisuels, des dispositifs de brouillage de contenus audiovisuels ainsi que sur les systèmes de vidéo à la demande.

L'invention a pour but de résoudre les inconvénients de l'art antérieur en proposant un système permettant de maintenir les équipements susmentionnés opérationnels même lorsque le standard de codage vidéo ainsi que le transport du flux de données seront modifiés.

A cette fin, selon un premier aspect, l'invention propose un procédé de traitement d'un flux de données audiovisuelles, le flux de données étant constitué à partir de groupes de données, un groupe de données étant composé d'une suite de sous-groupes de données, un sous-groupe de données comprenant des informations représentatives du type de données comprises dans le sous-groupe de données, caractérisé en ce que le procédé comporte les étapes de recherche parmi les sous-groupes de données d'un groupe de données, d'un type prédéterminé de données comprises dans un sous-groupe de données, le type prédéterminé de données étant représentatif d'un début d'image ou d'un début de séquence d'images et d' association, au groupe de données, d'un code prédéterminé représentatif du type prédéterminé de données présentes dans un sous-groupe de données du groupe de données.

Corrélativement, l'invention concerne un dispositif de traitement d'un flux de données audiovisuelles, le flux de données étant constitué à partir de groupes de données, un groupe de données étant composé d'une suite de sous-groupes de données, un sous-groupe de données comprenant des informations représentatives du type de données comprises dans le sous-groupe de données, caractérisé en ce que le dispositif comporte des moyens de recherche parmi les sous-groupes de données d'un groupe de données, d'un type prédéterminé de données comprises dans un sous-groupe de données, le type prédéterminé de données étant représentatif d'un début d'image ou d'un début de séquence d'images et des moyens d'association, au groupe de données, d'un code prédéterminé représentatif du type prédéterminé de données présentes dans un sous-groupe de données du groupe de données.

Ainsi, en associant à un groupe de données un code prédéterminé représentatif du type prédéterminé de données présentes dans un sous-groupe de données du groupe de données, il est possible de notifier la présence de ce type de données dans un sous-groupe d'un groupe de données sans qu'il soit nécessaire de lire les sous-groupes.

En effet, les inventeurs de la présente invention ont découvert qu'un nombre important d'équipements ne discernent pas le type de compression utilisée pour coder le flux de données. En effet, il importe peu à ces équipements que l'information transmise soit compressée conformément au standard ISO/IEC International Standard 13818-2 ou au standard ISO/IEC International Standard 14916-10 ou au standard ISO/IEC International Standard 14916-2.

Ainsi, en associant à un groupe de données un code prédéterminé représentatif du type prédéterminé de données présentes dans un sous-groupe de données du groupe de données, les équipements sont toujours aptes à traiter des flux de données et cela même si le standard de compression de données est modifié.

Selon un autre aspect de l'invention, les groupes et les sous-groupes de données sont conformes à un premier format de codage de données et le code prédéterminé est conforme à un autre format de codage de données.

Ainsi, en associant un code prédéterminé conforme à un autre format de codage de données, certains équipements définis pour ce format de codage sont aussi aptes à traiter des flux de données dans un format différent.

Selon un autre aspect de l'invention, le code prédéterminé est associé au groupe de données en insérant celui-ci en en-tête du groupe de données.

Ainsi, la détection de ce code prédéterminé est simplifiée.

Selon un autre aspect de l'invention, le groupe de données et le code prédéterminé inséré sont inclus dans un paquet, et le paquet est décomposé en une pluralité de paquets formant une partie du flux de données audiovisuelles.

Selon un autre aspect de l'invention, on met un champ prédéterminé d'une table de programme associée au flux de données audiovisuelles à une valeur prédéterminée.

Ainsi, il est possible de déterminer rapidement si un flux de données a été modifié ou non modifié selon la présente invention.

Selon un autre aspect de l'invention, lorsque le type prédéterminé de données est représentatif d'un début de séquence d'images, un code prédéterminé représentatif d'un début de séquence d'images et un code prédéterminé représentatif d'un début de groupe d'images sont insérés en en-tête du groupe de données.

Selon un autre aspect de l'invention, lorsque le type prédéterminé de données est représentatif d'un début d'image, un code prédéterminé représentatif d'un début d'image est inséré en en-tête du groupe de données.

Ainsi, les équipements se synchronisant à partir de débuts de groupes d'images ou à partir de débuts de séquences d'images peuvent se synchroniser selon la présente invention.

Selon un autre aspect de l'invention, un groupe de données est une unité d'accès, un sous-groupe de données est une unité de couche d'abstraction réseau, les informations représentatives d'un type prédéterminé de données comprises dans un sous-groupe de données sont une structure syntaxique représentative du type de données de l'unité de couche d'abstraction et le code prédéterminé est un code de déclenchement.

L'invention concerne aussi un procédé de traitement d'un flux de données audiovisuelles, le flux de données étant constitué à partir de groupes de données, un groupe de données étant composé d'une suite de sous-groupes de données, un sous-groupe de données comprenant des informations représentatives du type de données comprises dans le sous-groupe de données, caractérisé en ce qu'à au moins un groupe de données est associé au moins un code prédéterminé représentatif d'un type prédéterminé de données comprises dans un sous-groupe de données du groupe de données et en ce que le procédé comporte les étapes de recherche, dans chaque groupe de données d'un code prédéterminé représentatif du type prédéterminé de données présentes dans un sous-groupe de données du groupe de données, le type prédéterminé de données étant représentatif d'un début d'image ou d'un début de séquence ou un groupe d'images et de suppression des codes prédéterminés du flux de données.

Corrélativement, l'invention propose un dispositif de traitement d'un flux de données audiovisuelles, le flux de données étant constitué à partir de groupes de données, un groupe de données étant composé d'une suite de sous-groupes de données, un sous-groupe de données comprenant des informations représentatives du type de données comprises dans le sous-groupe de données, caractérisé en ce qu'à au moins un groupe de données est associé au moins un code prédéterminé représentatif d'un type prédéterminé de données comprises dans un sous-groupe de données du groupe de données et en ce que le dispositif comporte des moyens de recherche, dans chaque groupe de données d'un code prédéterminé représentatif du type prédéterminé de données présentes dans un sous-groupe de données du groupe de données, le type prédéterminé de données étant représentatif d'un début d'image ou d'un début de séquence ou un groupe d'images et des moyens de suppression des codes prédéterminés du flux de données.

Ainsi, le dispositif de traitement peut se synchroniser à partir des codes prédéterminés, détecter et transmettre par la suite un flux de données conforme à un standard prédéterminé et donc utilisable par des dispositifs de traitement compatibles avec ce standard.

Selon un autre aspect de l'invention, on embrouille les groupes de données ne comprenant pas de code prédéterminé représentatif du type prédéterminé de données présentes dans un sous-groupe de données du groupe de données.

Selon un autre aspect de l'invention, on synchronise un dispositif de traitement pour le traitement du flux de données audiovisuelles à partir ou jusqu'à un groupe de données comprenant un code prédéterminé représentatif du type prédéterminé de données présentes dans un sous-groupe de données du groupe de données.

Ainsi, les équipements se synchronisant à partir de débuts de groupes d'images ou à partir de débuts de séquences d'images peuvent se synchroniser selon la présente invention.

L'invention concerne aussi un signal de données représentatives d'un flux de données audiovisuelles dans lequel le flux de données étant constitué à partir de groupes de données, un groupe de données étant composé d'une suite de sous-groupes de données, un sous-groupe de données comprenant des informations représentatives du type de données comprises dans le sous-groupe de données, caractérisé en ce que le signal comporte au moins un code prédéterminé associé à un groupe de données, le code prédéterminé étant représentatif d'un début d'image ou d'un début de séquence ou un groupe d'images dans un sous-groupe de données du groupe de données.

L'invention concerne aussi les programmes d'ordinateurs stockés sur un support d'informations, lesdits programmes comportant des instructions permettant de mettre en oeuvre les procédés de traitement précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente l'architecture du système de distribution de flux de données codées selon le standard IS0/IEC International Standard 14496-10 et transmis selon un flux de données basé sur le standard ISO/IEC International Standard 13818-1 ainsi que son troisième amendement dans lequel des codes prédéterminés ont été insérés selon la présente invention;
la Fig. 2 représente un schéma bloc du dispositif d'insertion de codes prédéterminés dans le flux de données codées selon le standard IS0/IEC International Standard 14496-10 et transmis selon un flux de données conforme au standard ISO/IEC International Standard 13818-1/FDAM3;
la Fig. 3 représente l'algorithme d'insertion de codes prédéterminés dans un flux de données codées selon le standard IS0/IEC International Standard 14496-10 et transmis selon un flux de données conforme au standard ISO/IEC International Standard 13818-1/FDAM3;
la Fig. 4a représente l'algorithme de détermination et d'insertion des différents codes selon la présente invention dans le flux de données codées selon le standard IS0/IEC International Standard 14496-10 et transmis selon un flux de données conforme au standard ISO/IEC International Standard 13818-1/FDAM3;
la Fig. 4b représente l'algorithme de détermination du type de couche d'abstraction réseau compris dans une unité d'accès ;
la Fig. 5 représente un schéma bloc du dispositif de détection et de traitement de codes prédéterminés insérés dans le flux de données codées selon le standard IS0/IEC International Standard 14496-10 et transmis selon un flux de données basé sur le standard ISO/IEC International Standard 13818-1/FDAM3;
la Fig. 6 représente l'algorithme de détection de codes prédéterminés insérés selon la présente invention dans un flux de données codées selon le standard IS0/IEC International Standard 14496-10 et transmis selon un flux de données basé sur le standard ISO/IEC International Standard 13818-1/FDAM3;
la Fig. 7 représente l'algorithme de suppression des codes prédéterminés insérés selon la présente invention dans un flux de données codées selon le standard IS0/IEC International Standard 14496-10 et transmis selon un flux de données basé sur le standard ISO/IEC International Standard 13818-1/FDAM3;
la Fig. 8 est un tableau représentant la spécification du descripteur IS0/IEC International Standard 14496-10 ;
la Fig. 9 est un tableau représentant les différents codes de déclenchement utilisés dans le standard ISO/IEC International Standard 13818-2 ;
la Fig. 10 représente les différentes valeurs prises par les codes indiquant les différents types d'unités de couche d'abstraction réseau selon le standard IS0/IEC International Standard 14496-10.

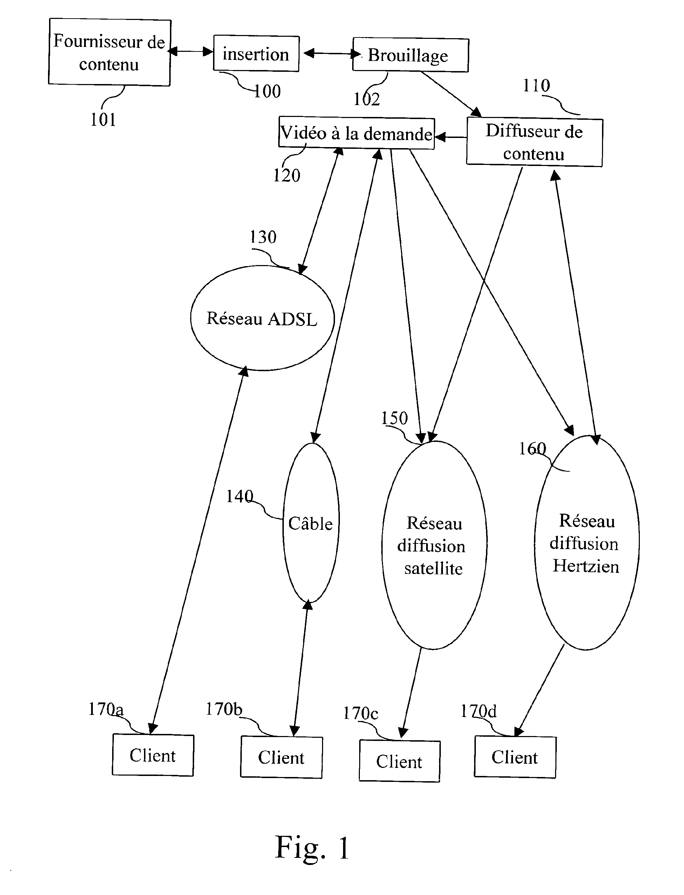

La Fig. 1 représente l'architecture du système de distribution de flux de données codées selon le standard IS0/IEC International Standard 14496-10 et transmis selon un flux de données basé sur le standard ISO/IEC International Standard 13818-1 ainsi que sur son troisième amendement ISO/IEC International Standard 13818-1/FDAM3.

Dans le système de distribution de flux de données selon la présente invention, un fournisseur de contenus 101 délivre des ensembles d'informations audiovisuelles à un diffuseur de contenus 110.

Ces ensembles d'informations sont codés selon le standard IS0/IEC International Standard 14496-10 et transmis selon un flux de données basé sur le standard ISO/IEC International Standard 13818-1/FDAM3.

Préalablement à la diffusion des ensembles d'informations par le diffuseur de contenus 110, les ensembles d'informations sont dans certains cas préalablement cryptés par un dispositif de brouillage 102 de manière à ce qu'un dispositif de réception non autorisé à recevoir ces ensembles d'informations ne puisse accéder à celles-ci.

Le dispositif de brouillage 102 est un dispositif de brouillage qui est par exemple apte à crypter des ensembles d'informations codés selon le standard MPEG-2 et transmis selon un flux de données conforme au standard ISO/IEC International Standard 13818-1/FDAM3.

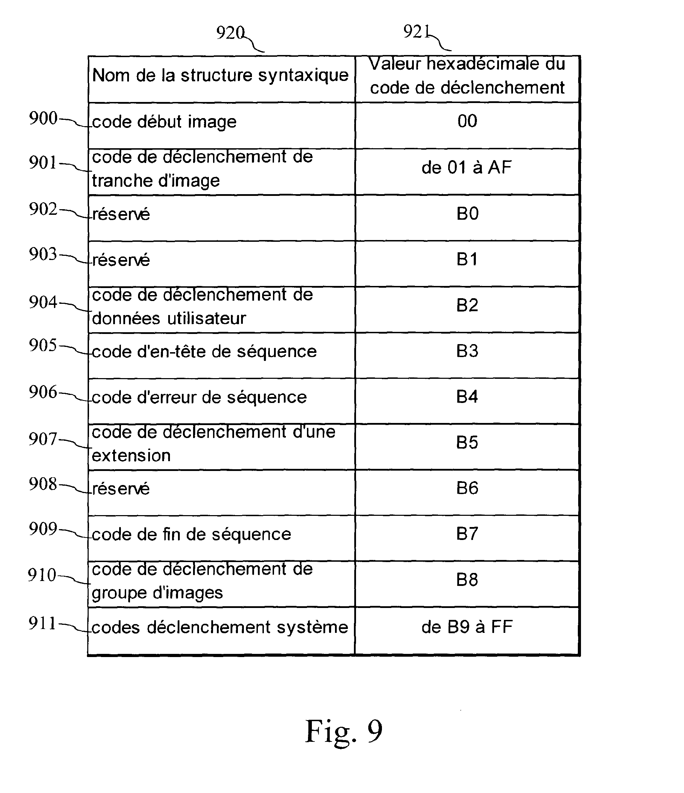

Le dispositif de brouillage 102 analyse ainsi le flux de données, détermine les différents codes de déclenchement qui sont compris dans le flux de données et crypte le flux de données à l'exception des données associées à chaque code prédéterminé. Ces codes de déclenchement sont par exemple des codes délimitant le début d'une image, d'une séquence d'images ou d'un groupe d'images. Ces codes seront décrits ultérieurement en regard de la Fig. 9.

Lorsque le dispositif de brouillage 102 reçoit du fournisseur de contenus 101 un flux de données codées selon le standard IS0/IEC International Standard 14496-10 et transmis selon un flux de données basé sur le standard ISO/IEC International Standard 13818-1/FDAM3 et dans lequel des codes prédéterminés ont été insérés selon la présente invention par un dispositif d'insertion 100, le dispositif de brouillage 102 analyse ainsi le flux de données détermine les différents codes prédéterminés qui sont compris dans le flux de données et crypte le flux de données à l'exception des paquets comprenant les données associées à chaque code prédéterminé.

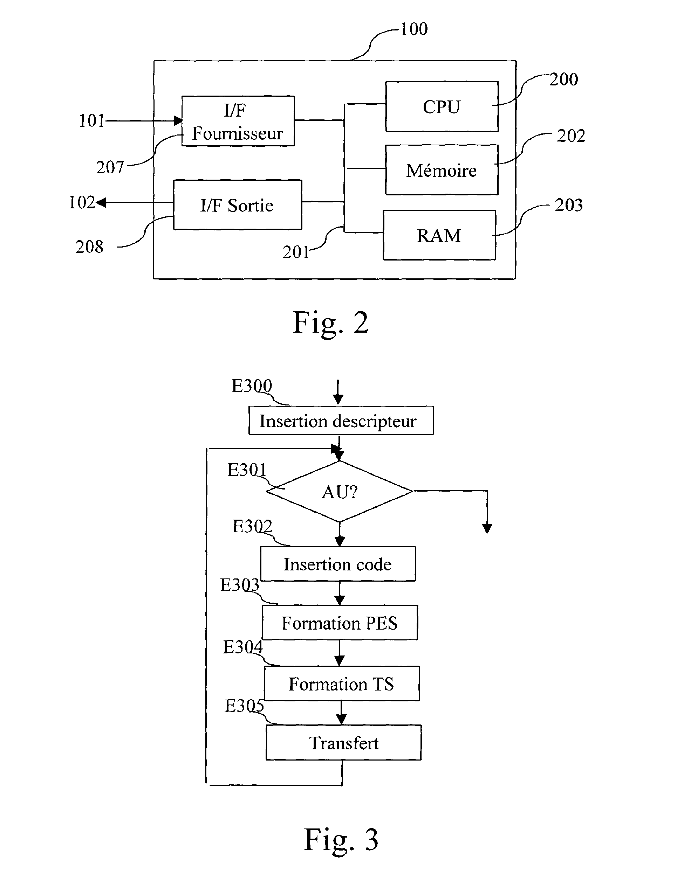

Le dispositif d'insertion 100 sera décrit plus en détail en référence à la Fig. 2.

Le diffuseur de contenus 110 diffuse, par l'intermédiaire d'un réseau de diffusion Hertzien 160 ou un réseau de diffusion satellite 150, les flux de données codées selon le standard IS0/IEC International Standard 14496-10 et transmis selon un flux de données basé sur le standard ISO/IEC International Standard 13818-1/FDAM3 dans lequel des codes prédéterminés ont été insérés selon la présente invention à des clients disposant respectivement de décodeurs 170d et 170c.

Lorsqu'un client commande un changement de programme, le décodeur 170 analyse le flux de données correspondant au programme que le client désire visualiser, détermine les différents codes prédéterminés qui sont compris dans ce flux de données et décrypte le flux de données du programme en utilisant les codes prédéterminés comme moyens de synchronisation de manière à ce que le programme puisse être décodé par la suite et visualisé de manière correcte par le client.

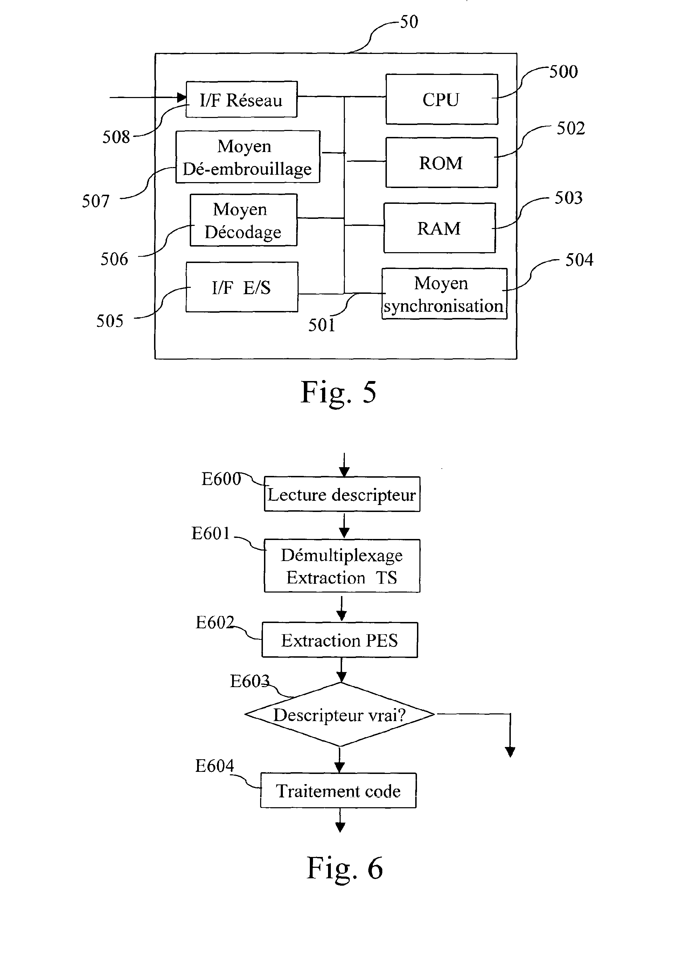

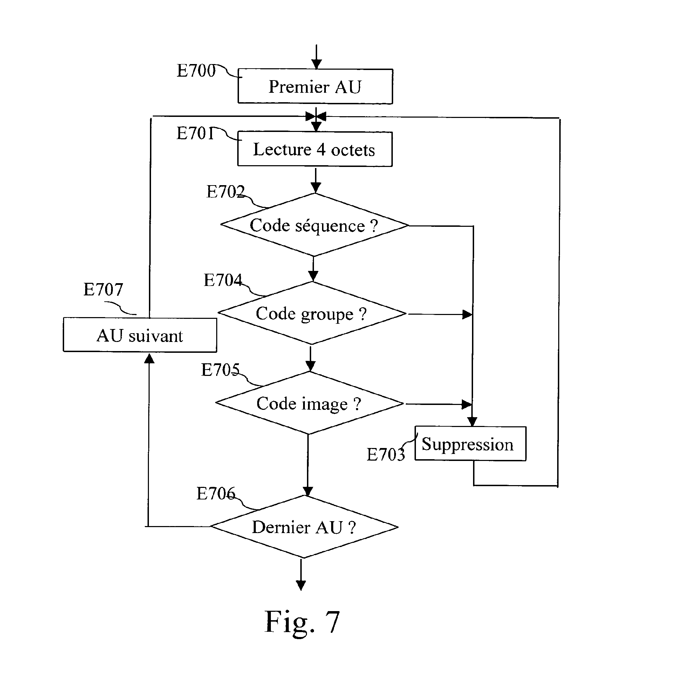

Les décodeurs 170c et 170d implémentent l'algorithme de détection d'un flux de données qui sera décrit ultérieurement à la Fig. 6 ainsi que l'algorithme de traitement de codes prédéterminés qui sera décrit ultérieurement à la Fig. 7.

Le diffuseur de contenus 110 transfère à un dispositif de fourniture de vidéo à la demande 120 les flux de données codées selon le standard IS0/IEC International Standard 14496-10 et transmis selon un flux de données basé sur le standard ISO/IEC International Standard 13818-1/FDAM3 dans lequel des codes prédéterminés ont été insérés selon la présente invention.

Le dispositif de vidéo à la demande 120, en réponse à des requêtes de clients disposant de décodeurs tels que par exemple les décodeurs 170a, 170b, 170c et/ou 170d, délivre un flux de données ou une partie d'un flux de données aux décodeurs 170a et/ou 170b et/ou 170c et/ou 170d par l'intermédiaire d'un réseau de télécommunication de type ADSL 130 et/ou par l'intermédiaire d'un réseau câblé 140 et/ou par l'intermédiaire du réseau diffusion Hertzien 160 et/ou du réseau de diffusion satellite 150.

Il est à remarquer ici que les requêtes de clients disposant de décodeurs tels que par exemple les décodeurs 170c et/ou 170d, sont reçues par le dispositif de vidéo à la demande 120 par exemple par l'intermédiaire d'un réseau téléphonique commuté non représenté en Fig. 1.

Le dispositif de vidéo à la demande 120 est apte à délivrer en temps réel des ensembles d'informations audiovisuelles. Il est aussi apte à délivrer des parties d'un ensemble d'informations audiovisuelles lorsqu'un client commande la revisualisation d'une partie d'un ensemble d'informations audiovisuelles ou lorsqu'un client commande une avance accélérée d'une partie de l'ensemble d'informations audiovisuelles.

Pour cela, le dispositif de vidéo à la demande 120 analyse le flux de données et détermine les codes prédéterminés compris dans le flux de données et proches des instants dans l'ensemble d'informations audiovisuelles que le client désire revoir ou ne pas voir.

Le dispositif de vidéo à la demande 120 procède à la transmission ou arrête la transmission du flux de données à partir des groupes de données auxquels les codes prédéterminés selon l'invention sont associés.

Le dispositif de vidéo à la demande 120 implémente l'algorithme de détection de codes prédéterminés insérés selon la présente invention dans un flux de données codées selon le standard IS0/IEC International Standard 14496-10 et transmis selon un flux de données basé sur le standard ISO/IEC International Standard 13818-1/FDAM3. Cet algorithme sera décrit ultérieurement en référence à la Fig. 6.

Le dispositif de vidéo à la demande 120 implémente aussi dans un mode particulier l'algorithme de traitement des codes prédéterminés qui sera décrit ultérieurement à la Fig. 7.

La Fig. 2 représente un schéma bloc du dispositif d'insertion de codes prédéterminés dans le flux de données codées selon le standard IS0/IEC International Standard 14496-10 et transmis selon un flux de données basé sur le standard ISO/IEC International Standard 13818-1/FDAM3.

Le dispositif d'insertion de codes prédéterminés 100 est apte à analyser le flux de données codées selon le standard IS0/IEC International Standard 14496-10 et transmis selon le standard ISO/IEC International Standard 13818-1/FDAM3, à déterminer le type d'unités de couche d'adaptation réseau comprises dans le flux de données et à insérer, dans le flux de données, des codes prédéterminés en fonction des types d'unités de couche d'adaptation réseau déterminés si ceux-ci correspondent à un début d'une image, d'une séquence d'images.

Bien entendu, le dispositif d'insertion de codes prédéterminés 100 est aussi apte à insérer des codes prédéterminés en fonction d'autres de types de couche d'adaptation réseau que ceux correspondant à un début d'une image ou une séquence d'images.

Le dispositif d'insertion de codes prédéterminés 100 est aussi apte à traiter des flux de données audio.

Le dispositif d'insertion de codes prédéterminés 100 comporte un bus de communication 201 auquel sont reliées une unité centrale 200, une mémoire non volatile 202, une mémoire vive RAM 203, une interface fournisseur de contenus 207 apte à recevoir un flux de données codées selon le standard IS0/IEC International Standard 14496-10 et transmis selon le standard ISO/IEC International Standard 13818-1/FDAM3 et une interface de sortie apte à transférer le flux de données modifié selon la présente invention.

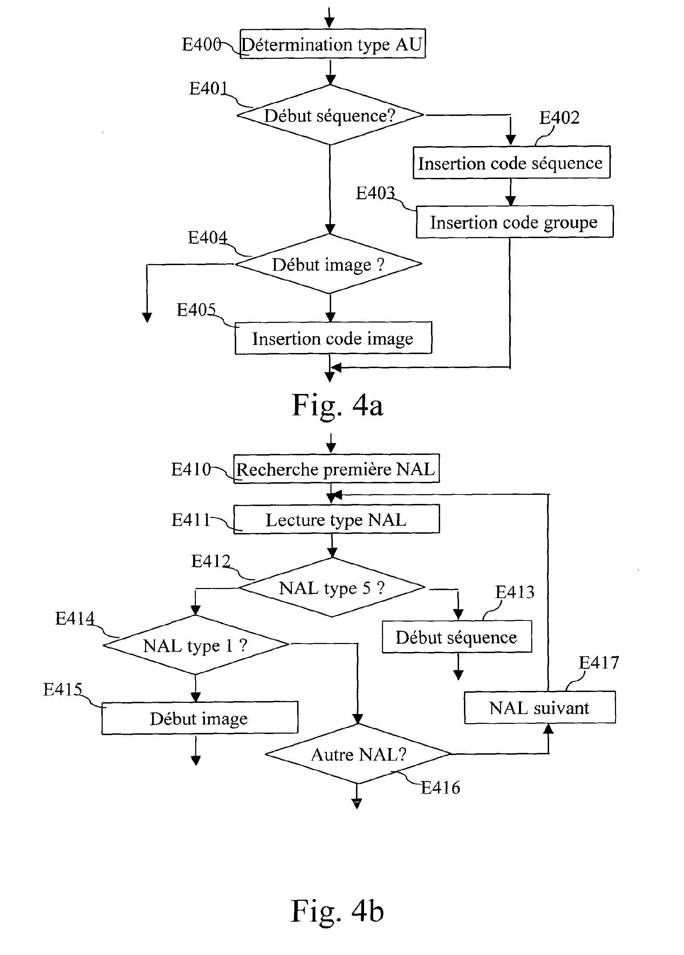

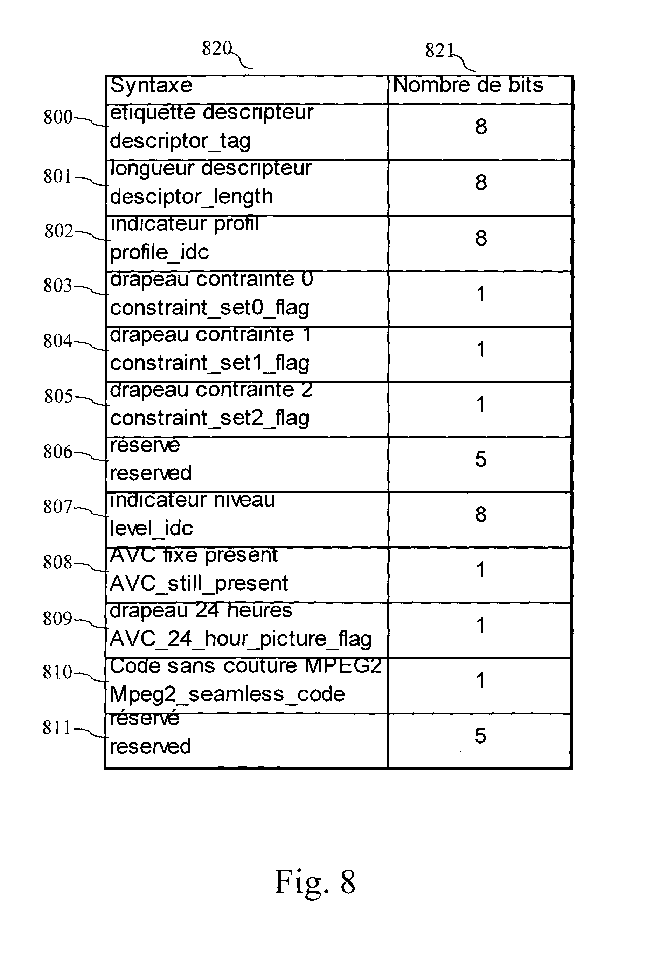

La mémoire non volatile 202 mémorise entre autres les programmes mettant en oeuvre l'invention qui seront décrits ultérieurement en référence aux Figs. 3 et 4 ainsi que les tableaux représentés aux Figs. 8, 9 et 10 qui seront décrits ultérieurement.

De manière plus générale, les programmes selon la présente invention sont mémorisés dans un moyen de stockage. Ce moyen de stockage est lisible par un ordinateur ou un microprocesseur 200. Ce moyen de stockage est intégré ou non au dispositif d'insertion de codes prédéterminés 100, et peut être amovible.

Lors de la mise sous tension du dispositif d'insertion de codes prédéterminés 100, les programmes selon la présente invention sont transférés dans la mémoire vive 203 qui contient alors le code exécutable de l'invention ainsi que les données nécessaires à la mise en oeuvre de l'invention.

Le microprocesseur 200 est apte à exécuter les différentes instructions correspondant aux algorithmes des Figs. 3 et 4.

Il est à remarquer ici que le dispositif d'insertion de codes prédéterminés 100 peut en variante être intégré au fournisseur de contenus 101 ou au dispositif de brouillage 102.

La Fig. 3 représente l'algorithme d'insertion de codes prédéterminés dans un flux de données codées selon le standard IS0/IEC International Standard 14496-10 et transmis selon un flux de données conforme au standard ISO/IEC International Standard 13818-1/FDAM3.

Le processeur 200 du dispositif d'insertion de codes prédéterminés 100 lit, à partir de la mémoire non volatile 202, les instructions du programme correspondant aux étapes E300 à E305 de la Fig. 3 et les charge en mémoire vive 203 pour les exécuter.

A l'étape E300, le processeur 200 du dispositif d'insertion de codes prédéterminés 100 positionne à une valeur prédéterminée le champ correspondant au nouveau code prédéterminé selon l'invention dans la table de programme correspondant au flux de données codées selon le standard IS0/IEC International Standard 14496-10.

Ce code prédéterminé est plus précisément un champ de descripteur représentatif de la présence, dans le flux de données, de codes prédéterminés conformes au standard ISO/IEC International Standard 13818-2 et représentatifs d'un début d'une image, d'une séquence d'images ou d'un groupe d'images.

Ce champ de descripteur noté code mode transparent MPEG-2 ou Mpeg2_seamless_code est selon la présente invention un nouveau champ du descripteur vidéo AVC tel que représenté à la ligne 810 de la Fig. 8 qui sera décrite ultérieurement.

Dans le standard ISO/IEC International Standard 14496-10, les données sont groupées en unités d'accès AU, acronyme de Access Unit en terminologie anglo-saxonne.

Chaque unité d'accès est composée d'une suite d'unités de couche d'abstraction réseau NAL, acronyme de Network Abstracted Layer. L'ensemble des unités de couche d'abstraction réseau est formé conformément au standard ISO/IEC International Standard 14496 et ordonné conformément au standard ISO/IEC International Standard 13818-1/FDAM3.

Le processeur 200 détermine ainsi dans le flux de données la présence d'une unité d'accès AU à l'étape suivante E301.

A la détection d'une unité d'accès, le processeur 200 passe à l'étape suivante E302 et insère au moins un code prédéterminé selon la présente invention dans le flux de données.

Cette étape sera explicitée plus en détail en regard des Figs. 4a et 4b décrites ultérieurement.

Cette opération effectuée, le processeur 200 passe à l'étape suivante E303 et forme à partir de chaque unité d'accès un paquet de type PES, acronyme de Packetized Elementary Stream conformément au standard ISO/IEC International Standard 13818-1.

Il est à remarquer que le paquet PES formé est de longueur variable et comprend un en-tête et des données utiles qui sont le contenu de l'unité d'accès traitée.

Cette opération effectuée, le processeur 200 passe à l'étape suivante E304 et forme le flux de données en subdivisant le paquet PES précédemment formé en une pluralité de paquets de type MPEG-2 TS conformément au standard ISO/IEC International Standard 13818-1.

Il est à remarquer ici que TS est l'acronyme en terminologie anglo-saxonne de Transport Stream » ou flux de transport.

Il est à remarquer aussi que les paquets de transport TS formés sont multiplexés avec les autres composantes telles que des composantes sonores de l'ensemble de données, voire avec d'autres ensembles de données.

Cette opération effectuée, le flux de données est ensuite transféré à l'étape E305.

Le processeur 200 retourne ensuite à l'étape E301 et détermine, dans le flux de données, la présence d'une nouvelle unité d'accès AU.

Le processeur 200 va ainsi exécuter la boucle constituée des étapes E301 à E305 tant que des unités d'accès seront à traiter.

Lorsque toutes les unités d'accès ont été traitées, le processeur 200 arrête le présent algorithme et attend un nouveau flux de données codées selon le standard IS0/IEC International Standard 14496-10 et transmis selon un flux de données conforme au standard ISO/IEC International Standard 13818-1/FDAM3 à traiter.

La Fig. 4a représente l'algorithme de détermination et d'insertion des différents codes selon la présente invention dans le flux de données codées selon le standard IS0/IEC International Standard 14496-10 et transmis selon un flux de données conforme au standard ISO/IEC International Standard 13818-1.

Le processeur 200 du dispositif d'insertion de codes prédéterminés 100 lit, à partir de la mémoire non volatile 202, les instructions du programme correspondant aux étapes E400 à E405 de la Fig. 4a et les charge en mémoire vive 203 pour les exécuter.

L'étape d'insertion E302 d'au moins un code prédéterminé se décompose en six étapes notées E400 à E405.

A l'étape E400, le processeur 200 du dispositif d'insertion de codes prédéterminés 100 détermine le type d'unité d'accès en cours de traitement. La détermination du type d'unité d'accès sera décrite ultérieurement en détail en référence à la Fig. 4b.

Plus précisément, le processeur 200 détermine si l'unité d'accès comprend un début de séquence ou un début d'image.

Lorsque le type d'unité d'accès est déterminé, le processeur 200 passe à l'étape suivante E401.

A cette étape, le processeur 200 teste si le type d'unité d'accès déterminé à l'étape précédente E400 correspond ou non à un début de séquence.

Dans l'affirmative, le processeur 200 passe à l'étape E402.

Le processeur 200 insère à cette étape au début de l'unité d'accès en cours de traitement, un code prédéterminé représentatif d'un début de séquence.

Ce code prédéterminé représentatif d'un début de séquence est constitué d'un code de déclenchement identique à celui du standard ISO/IEC International Standard 13818-2.

Les différents codes de déclenchement de ce standard sont représentés à la Fig. 9 qui sera décrite ultérieurement.

Le code prédéterminé est constitué de quatre octets. Les trois premiers octets de préfixe sont à la valeur hexadécimale « 010000 » et le dernier octet représentatif d'un début de séquence est conforme au code d'en-tête de séquence « B3 » de la ligne 905 de la Fig. 9.

Cette opération effectuée, le processeur 200 passe à l'étape suivante E403 et insère, à la suite du code prédéterminé précédemment inséré à l'étape E402, un code prédéterminé représentatif d'un début de groupe d'images.

En effet, selon le standard ISO/IEC International Standard 14496-10 et contrairement au standard ISO/IEC International Standard 13818-2, il n'est pas fait de distinction entre les séquences et les groupes d'images. Afin d'assurer néanmoins une compatibilité avec des systèmes conformes au standard ISO/IEC International Standard 13818-2, les deux codes prédéterminés correspondant aux séquences et auxd'images sont insérés.

Le code prédéterminé représentatif d'un début de groupe d'images est constitué d'un code de déclenchement conforme au standard ISO/IEC International Standard 13818-2.

Le code prédéterminé est constitué de quatre octets. Les trois premiers octets de préfixe sont à la valeur hexadécimale « 010000 » et le dernier octet représentatif d'un début de groupe d'images est conforme au code d'en-tête de séquence « B8 » de la ligne 910 de la Fig. 9.

Cette opération réalisée, le processeur 200 retourne à l'étape E303 précédemment décrite.

Si le test de l'étape E401 est négatif, le processeur 200 passe à l'étape E404.

A cette étape, le processeur 200 teste si le type d'unité d'accès déterminé à l'étape précédente E400 correspond ou non à un début d'image.

Dans la négative, le processeur 200 retourne à l'étape E303 de l'algorithme de la Fig. 3 précédemment décrit.

Dans l'affirmative, le processeur 200 insère au début de l'unité d'accès en cours de traitement un code prédéterminé représentatif d'un début d'image.

Ce code prédéterminé représentatif d'un début d'image est constitué d'un code de déclenchement conforme au standard ISO/IEC International Standard 13818-2.

Les différents codes de déclenchement de ce standard sont représentés à la Fig. 9 qui sera décrite ultérieurement.

Le code prédéterminé est constitué de quatre octets. Les trois premiers octets de préfixe sont à la valeur hexadécimale 010000 et le dernier octet représentatif d'un début d'image est conforme au code d'en-tête de séquence 00 de la ligne 900 de la Fig. 9.

Cette opération réalisée, le processeur 200 retourne à l'étape E303 de l'algorithme de la Fig. 3 précédemment décrit.

La Fig. 4b représente l'algorithme de détermination du type d'unité de couche d'abstraction réseau compris dans une unité d'accès AU.

Le processeur 200 du dispositif d'insertion de codes prédéterminés 100 lit, à partir de la mémoire non volatile 202, les instructions du programme correspondant aux étapes E410 à E417 de la Fig. 4b et les charge en mémoire vive 203 pour les exécuter.

L'étape E400, de détermination du type d'unité d'accès en cours de traitement, se décompose en huit étapes E410 à E417.

Conformément au standard ISO/IEC International Standard 14496-10 et plus précisément selon le standard ISO/IEC International Standard 13818-1/FDAM3, les données sont groupées en unités d'accès AU, qui sont composées d'une suite de d'unités de couche d'abstraction réseau NAL.

A l'étape E410, le processeur 200 du dispositif d'insertion de codes prédéterminés 100 recherche dans l'unité d'accès en cours de traitement la première unité de couche d'abstraction réseau.

A l'étape suivante E412, le processeur 200 vérifie si le type déterminé précédemment à l'étape E411 est un type d'unité de couche d'abstraction réseau de type cinq, c'est à dire si l'unité de couche d'abstraction réseau comprend une tranche codée d'une image IDR. Une image IDR, acronyme de Instantaneous Decoding Refresh est une image de rafraîchissement de décodage instantané.

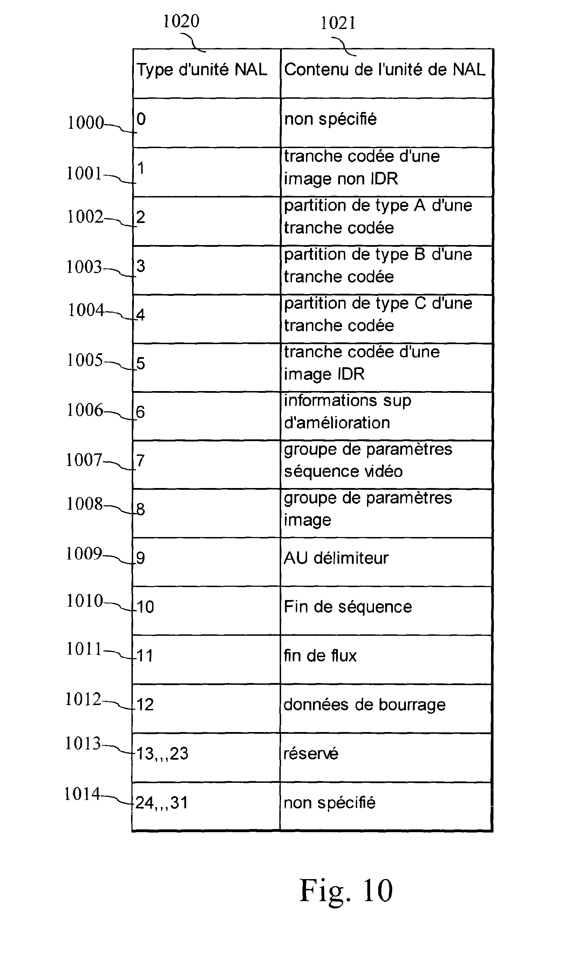

Pour cela, le processeur 200 lit le code indiquant le type de NAL compris dans celui-ci et identifie le type de NAL à partir de la table représentée à la Fig. 10. Cette table indique les différentes valeurs prises par les codes indiquant les différents types de NAL selon le standard IS0/IEC International Standard 14496-10.

Si le type déterminé correspond au type de la ligne 1005 de la Fig. 10, le processeur 200 passe à l'étape E413.

A cette étape, le processeur 200 associe la présence d'une unité de couche d'abstraction réseau de type tranche codée d'une image IDR dans l'unité d'accès en cours de traitement au fait que l'unité d'accès comprend un début de séquence d'images.

Cette opération effectuée, le processeur 200 retourne à l'étape E401 de la Fig. 4 précédemment décrite.

Si le type déterminé précédemment n'est pas un type d'unité de couche d'abstraction réseau de type cinq, le processeur 200 passe à l'étape E414.

A l'étape E414, le processeur 200 vérifie si le type déterminé précédemment est un type d'unité de couche d'abstraction réseau de type un, c'est-à-dire si l'unité de couche d'abstraction réseau comprend une tranche codée d'une image non IDR.

Pour cela, le processeur 200 lit le code indiquant le type de NAL compris dans celui-ci et identifie le type de NAL à partir de la table représentée à la Fig. 10.

Si le type déterminé correspond au type de la ligne 1001 de la Fig. 10, le processeur 200 passe à l'étape E415.

A cette étape, le processeur 200 associe la présence d'une unité de couche d'abstraction réseau de type tranche codée d'une image non IDR dans l'unité d'accès en cours de traitement, au fait que l'unité d'accès comprend un début d'image.

Cette opération effectuée, le processeur 200 retourne à l'étape E401 de la Fig. 4 précédemment décrite.

Si le type déterminé ne correspond pas au type de la ligne 1001 de la Fig. 10, le processeur 200 passe à l'étape E416.

A cette étape, le processeur 200 vérifie si d'autres unités de couche d'abstraction réseau sont présentes dans l'unité d'accès AU en cours de traitement.

Dans la négative, le processeur 200 retourne à l'étape E303 de l'algorithme de la Fig. 3.

Si au moins une unité de couche d'abstraction réseau suivante est présente dans l'unité d'accès en cours de traitement, le processeur 200 passe à l'unité de couche d'abstraction réseau suivante à l'étape E417 et réitère les étapes E410 à E416 tant qu'une unité de couche d'abstraction réseau de type tranche codée d'une image IDR ou non IDR n'a pas été trouvée dans l'unité d'accès.

Ainsi, il est à remarquer que la présente invention associe à une unité d'accès, une information basée sur un type d'unité de couche d'abstraction réseau compris dans l'unité d'accès.

La Fig. 5 représente un schéma bloc du dispositif de détection et de traitement de codes prédéterminés insérés dans le flux de données codées selon le standard IS0/IEC International Standard 14496-10 et transmis selon un flux de données basé sur le standard ISO/IEC International Standard 13818-1/FDAM3.

Le dispositif de détection et de suppression de codes prédéterminés 50 est apte à analyser le flux de données codées selon le standard IS0/IEC International Standard 14496-10 et transmis selon un flux de données basé sur le standard ISO/IEC International Standard 13818-1/FDAM3 dans lequel des codes prédéterminés ont été insérés selon la présente invention, à déterminer la présence de codes prédéterminés dans le flux de données, et à effectuer un traitement à partir de ces codes prédéterminés.

Le dispositif de détection et de suppression de codes prédéterminés 50 est par exemple intégré dans un décodeur 170a, 170b, 170c, 170d.

Le dispositif de détection et de suppression de codes prédéterminés 50 peut aussi être intégré dans un dispositif de brouillage 102.

Le dispositif de détection et de suppression de codes prédéterminés 50 peut aussi être intégré dans un dispositif de vidéo à la demande 120.

Bien entendu, le dispositif de détection et de suppression de codes prédéterminés 50 est aussi apte à traiter des codes prédéterminés en fonction d'autres de types de couche d'adaptation réseau que ceux correspondant à un début d'une image ou une séquence d'images, voire des informations audio.

Le dispositif de détection et de suppression de codes prédéterminés 50 comporte un bus de communication 501 auquel sont reliés une unité centrale 500, une mémoire non volatile 502, une mémoire vive RAM 503, une interface réseau 508, des moyens de synchronisation 504, des moyens de décodage 506, des moyens de dé-embrouillage 507 et une interface réseau 508.

La mémoire non volatile 502 mémorise entre autres les programmes mettant en oeuvre l'invention qui seront décrits ultérieurement en référence aux Figs. 6 et 7.

De manière plus générale, les programmes selon la présente invention sont mémorisés dans un moyen de stockage. Ce moyen de stockage est lisible par un ordinateur ou un microprocesseur 500. Ce moyen de stockage est intégré ou non au dispositif de détection et de suppression de codes prédéterminés 50, et peut être amovible.

Lors de la mise sous tension du dispositif de détection et de suppression de codes prédéterminés 50 les programmes selon la présente invention sont transférés dans la mémoire vive 503 qui contient alors le code exécutable de l'invention ainsi que les données nécessaires à la mise en oeuvre de l'invention.

Le microprocesseur 500 est apte à exécuter les différentes instructions correspondant aux algorithmes des Figs. 6 et 7.

Le moyen de dé-embrouillage 507 décrypte le flux de données qui a préalablement été crypté par le dispositif de brouillage 102 de la Fig. 1.

Le moyen de décodage 506 est par exemple un décodeur conforme au standard ISO/IEC International Standard 14496-10. Le processeur 500, préalablement au transfert du flux de données au décodeur 506, supprime du flux de données, les codes prédéterminés précédemment insérés par le dispositif d'insertion 100 de la Fig. 2.

L'interface réseau 508 permet la réception du flux de données par l'intermédiaire du réseau ADSL 130 ou du réseau câblé 140 ou du réseau de diffusion satellite 150 ou du réseau de diffusion hertzien 160.

L'interface entrée/sortie 505 assure le transfert du flux de données désembrouillé et décodé vers par exemple un téléviseur non représenté.

La Fig. 6 représente l'algorithme de détection de codes prédéterminés insérés selon la présente invention dans un flux de données codées selon le standard IS0/IEC International Standard 14496-10 et transmis selon un flux de données basé sur le standard ISO/IEC International Standard 13818-1/FDAM3.

Le processeur 500 du dispositif de détection et de suppression de codes prédéterminés 50 lit, à partir de la mémoire non volatile 502, les instructions du programme correspondant aux étapes E600 à E604 de la Fig. 6 et les charge en mémoire vive 503 pour les exécuter.

A l'étape E600, le processeur 500 du dispositif de détection et de suppression de codes prédéterminés 50 lit la table de programme correspondant au flux de données codées selon le standard IS0/IEC International Standard 14496-10 et détermine si un code prédéterminé est compris dans la table de programme ainsi que la valeur du champ associé à celui-ci.

Ce code prédéterminé est plus précisément un champ d'un descripteur vidéo et est représentatif, lorsque celui-ci est à une valeur prédéterminée, de la présence dans le flux de données de codes prédéterminés conformes au standard ISO/IEC International Standard 13818-2 et représentatifs d'un début d'une image, d'une séquence d'images ou d'un groupe d'images.

Ce champ du descripteur noté code mode transparent MPEG-2 ou Mpeg2_seamless_code est un nouveau champ du descripteur vidéo AVC tel que représenté à la ligne 810 de la Fig. 8 qui sera décrite ultérieurement.

A l'étape E601, le processeur 500 procède au démultiplage du flux de données formé d'une pluralité de paquets de type MPEG-2 TS conformes au standard « ISO/IEC International Standard 13818-1/FDAM3 Transport of AVC video Data over ISO/IEC 13818-1 »

Cette opération effectuée, le processeur 500 passe à l'étape suivante E602 et forme un paquet de flux élémentaire noté PES conforme au standard « ISO/IEC International Standard 13818-1/FDAM3 Transport of AVC video Data over ISO/IEC 13818-1 ».

Cette opération effectuée, le processeur 500 passe à l'étape E603 et vérifie si la valeur du champ du descripteur noté code mode transparent MPEG-2 a été lue dans la table de programme associée au flux de données associée au flux de données.

Si la valeur du champ est à une valeur prédéterminée, par exemple à la valeur 1, le processeur 500 passe à l'étape suivante E604 qui consiste à effectuer un traitement sur le flux de données. S'il n'existe pas de champ ou si la valeur du champ est à une autre valeur que la valeur prédéterminée, le processeur 500 arrête le présent algorithme.

Ce traitement consiste à détecter dans le flux de données des codes prédéterminés représentatifs d'un début d'image ou un début de séquence d'images et à supprimer ceux-ci comme cela sera explicité plus en détail en référence à la Fig. 7 pour un décodage du flux de données par le moyen de décodage 506 du dispositif de détection et de suppression de codes prédéterminés 50.

Ce traitement peut consister aussi à délivrer un signal de synchronisation au moyen de dé-embrouillage 506 du dispositif de détection et de suppression de codes prédéterminés 50.

Ce traitement peut consister aussi, lorsque le dispositif de détection et de suppression de codes prédéterminés 50 est intégré dans un dispositif de vidéo à la demande 120, à transférer à partir du début d'image ou un début de séquence d'images une partie du flux de données en réponse à une commande d'un client telle que par exemple un retour en arrière dans la transmission d'une vidéo à la demande, une avance rapide ou voire une commande de pause.

La Fig. 7 représente l'algorithme de suppression des codes prédéterminés insérés selon la présente invention dans un flux de données codées selon le standard IS0/IEC International Standard 14496-10 et transmis selon un flux de données basé sur le standard ISO/IEC International Standard 13818-1/FDAM3.

Le processeur 500 du dispositif de détection et de suppression de codes prédéterminés 50 lit, à partir de la mémoire non volatile 502, les instructions du programme correspondant aux étapes E700 à E707 de la Fig. 7 et les charge en mémoire vive 503 pour les exécuter.

A l'étape E700, le processeur 500 forme, à partir d'un paquet PES extrait à l'étape E602 de l'algorithme de la Fig. 6, une première unité d'accès AU.

Cette opération effectuée, le processeur 500 passe à l'étape suivante E701 et lit les quatre premiers octets de l'unité d'accès AU.

A l'étape suivante E702, le processeur 500 vérifie si les quatre premiers octets précédemment lus correspondent à un code prédéterminé représentatif d'un début de séquence d'images.

Pour cela, le processeur 500 détermine si les trois premiers octets sont à la valeur hexadécimale « 010000 » et le dernier octet représentatif d'un début de séquence est conforme au code d'en-tête de séquence B3 de la ligne 905 de la Fig. 9.

Dans l'affirmative, le processeur 500 passe à l'étape suivante E703 et efface les quatre octets précédemment lus à l'étape E701 de l'unité d'accès AU.

Il est à remarquer ici que le processeur 500 peut transférer un signal de synchronisation au moyen de dé-embrouillage 507 du dispositif de détection et de suppression de codes prédéterminés 50, ou procéder au transfert d'une partie du flux de données à partir de cette unité d'accès AU.

Lorsque les quatre octets ont été supprimés, le processeur 500 retourne à l'étape E701 et lit les quatre premiers de l'unité d'accès AU.

A l'étape suivante E702, le processeur 500 vérifie si les quatre premiers octets précédemment lus correspondent à un code prédéterminé représentatif d'un début de séquence d'images.

Pour cela, le processeur 500 détermine si les trois premiers octets sont à la valeur hexadécimale « 010000 » et le dernier octet représentatif d'un début de séquence d'images est conforme au code d'en-tête de séquence B3 de la ligne 905 de la Fig. 9.

Dans la négative, le processeur 500 passe à l'étape suivante E704.

A l'étape suivante E704, le processeur 500 vérifie si les quatre premiers octets précédemment lus correspondent à un code prédéterminé représentatif d'un début de groupe d'images.

Pour cela, le processeur 500 détermine si les trois premiers octets sont à la valeur hexadécimale « 010000 » et le dernier octet représentatif d'un début de séquence d'images est conforme au code d'en-tête de séquence B8 de la ligne 910 de la Fig. 9.

Dans l'affirmative, le processeur 500 passe à l'étape suivante E703 et efface les quatre octets précédemment lus à l'étape E701 de l'unité d'accès AU.

Il est à remarquer ici, que de la même manière, le processeur 500 peut transférer un signal de synchronisation au moyen de dé-embrouillage 507 du dispositif de détection et de suppression de codes prédéterminés 50, ou procéder au transfert d'une partie du flux de données à partir de l'unité d'accès AU.

Si les quatre octets précédemment lus ne correspondent pas à un code prédéterminé représentatif d'un début de groupe d'images, le processeur 500 passe à l'étape E705.

A l'étape suivante E705, le processeur 500 vérifie si les quatre premiers octets précédemment lus correspondent à un code prédéterminé représentatif d'un début d'image.

Pour cela, le processeur 500 détermine si les trois premiers octets sont à la valeur hexadécimale 010000 et le dernier octet représentatif d'un début d'image est conforme au code d'en-tête de séquence 00 de la ligne 900 de la Fig. 9.

Dans l'affirmative, le processeur 500 passe à l'étape suivante E703 et efface les quatre octets précédemment lus à l'étape E701 de l'unité d'accès AU.

Dans la négative, l'unité d'accès ne comporte pas de début d'image ou de début de groupe ou de séquence d'images. Le processeur 500 passe à l'étape suivante E706.

A l'étape E706, le processeur 500 vérifie si une nouvelle unité d'accès AU est à traiter.

Dans la négative, le processeur 500 arrête le présent algorithme.

Dans l'affirmative, le processeur 500 passe à l'étape suivante E707 et forme à partir d'un nouveau paquet PES extrait à l'étape E602 de l'algorithme de la Fig. 6 une unité d'accès AU.

Cette opération effectuée, le processeur 500 réitère les étapes E701 à E707 précédemment décrites tant que des unités d'accès seront à traiter.

La Fig. 8 est un tableau représentant la spécification du descripteur IS0/IEC International Standard 14496-10.

Dans le standard ISO/IEC FDIS 14496-10 : «Information Technology - Coding of audio-visual objets- Part 10 Advanced video coding », le descripteur fournit les informations de base pour identifier les paramètres de codage du flux de données AVC associé.

AVC est l'acronyme de Advanced Video Coding, ou codage vidéo avancé.

Un descripteur AVC comprend une pluralité de champs représentés dans les lignes 800 à 811 de la Fig. 8.

Le tableau de la Fig. 8 comprend deux colonnes 820 et 821.

Dans la colonne 820, sont représentés les différents champs du descripteur AVC ainsi que leur syntaxe.

Dans la colonne 821, est indiqué pour chaque champ du descripteur AVC le nombre de bits utilisé pour coder la valeur du champ correspondante.

La ligne 800 comprend le champ étiquette descripteur dont la syntaxe est descriptor_tag et est représenté sur huit bits.

La ligne 801 comprend le champ longueur du descripteur dont la syntaxe est descriptor_length et est représenté sur huit bits.

La ligne 802 comprend le champ indicateur de profil dont la syntaxe est profile_idc et est représenté sur huit bits.

Ce champ doit identifier un profil valide pour le flux vidéo associé. La valeur de ce champ est définie dans le standard ISO/IEC International Standard FDIS 14496-10 : Information Technology ― Coding of audio-visual objects- Part 10 : Advanced Video coding. La valeur de ce champ indique le profil nécessaire au décodeur pour un décodage correct du flux de données associé.

Les lignes 803, 804 et 805 comprennent respectivement les drapeaux de contrainte 0, 1 et 2 dont la syntaxe est constraint_set0_flag, constraint_set1_flag, et constraint_set2_flag.

Chacun de ces champs est représenté respectivement par un bit.

Ces champs reprennent les valeurs de champs contenus dans le flux de données AVC associé et indiquent, s'ils sont à la valeur un, que la totalité du flux doit obéir aux contraintes imposées respectivement par les profils « Baseline, Main et Extended ».

La ligne 806 comprend un champ réservé dont la syntaxe est « reserved » et est représenté sur huit bits.

La ligne 807 comprend un champ indicateur de niveau dont la syntaxe est level_idc et est représenté sur huit bits.

La valeur de ce champ indique le niveau de décodeur nécessaire à un décodage correct du flux de données associé.

La ligne 808 comprend un champ AVC fixe présent dont la syntaxe est AVC_still_present et est représenté sur un bit.

Lorsque ce champ est mis à la valeur un, il indique que le flux de données associé peut inclure des images fixes. Lorsque ce champ est à la valeur zéro, le flux de données associé ne comprend pas d'images fixes.

La ligne 809 comprend un champ drapeau 24 heures dont la syntaxe est AVC_24_hour_picture code et est représenté sur 1 bit.

Ce drapeau, lorsqu'il est mis à valeur un, indique que le flux de données associé est susceptible de contenir des unités d'accès AU dont l'instant de présentation est supérieur à 24 heures.

La ligne 810 comprend un champ code mode transparent MPEG2 dont la syntaxe est Mpeg2_seamless_code et est représenté sur un bit.

Ce champ est le descripteur qui, conformément à la présente invention, est représentatif de la présence dans le flux de données de codes prédéterminés conformes au standard MPEG2 et représentatifs d'un début d'une image, d'une séquence d'images ou d'un groupe d'images.

Lorsque ce champ est à la valeur binaire 1, le flux de données associé a été modifié conformément à la présente invention.

La ligne 811 comprend un champ réservé dont la syntaxe est « reserved » et est représenté sur cinq bits.

La Fig. 9 est un tableau représentant les différents codes de déclenchement utilisés dans le standard MPEG-2.

Les codes de déclenchement sont des séquences binaires spécifiques qui n'apparaissent pas autrement dans le flux de données.

Chaque code de déclenchement se compose d'un préfixe de code de déclenchement, suivi d'une valeur de code de déclenchement.

Le tableau de la Fig. 9 comprend une pluralité de valeurs de codes de déclenchement représentés dans les lignes 900 à 911 de la Fig. 9.

Le tableau de la Fig. 9 comprend deux colonnes 920 et 921.

Dans la colonne 920 sont indiqués les noms de la structure syntaxique de ces codes.

Dans la colonne 921, est indiquée pour chaque structure syntaxique la valeur hexadécimale du code de déclenchement.

La ligne 900 comprend le code de début image ou « picture_start_code » et la valeur hexadécimale du code de déclenchement est « 00 ».

Ce code est utilisé dans la présente invention et est inséré dans le flux de données pour indiquer la présence d'unités NAL comprenant une tranche codée d'une image non IDR dans une unité d'accès AU.

La ligne 901 comprend le code de déclenchement de tranche d'image ou « slice_start_code » et la valeur hexadécimale du code de déclenchement est de « 01 » à « AF ».

Les lignes 902 et 903 sont réservées et les valeurs hexadécimales « B0 » et « B1 » leur sont respectivement associées.

La ligne 904 comprend le code de déclenchement de données utilisateur ou « user_data_start_code » et la valeur hexadécimale du code de déclenchement est de « B2 ».

La ligne 905 comprend le code de déclenchement de séquence d'images ou « sequence_start_code » et la valeur hexadécimale du code de déclenchement est « B3 ».

Ce code est utilisé dans la présente invention et est inséré dans le flux de données pour indiquer la présence d'unités de NAL comprenant une tranche codée d'une image IDR dans une unité d'accès AU.

La ligne 906 comprend le code d'erreur de séquence ou « sequence_error_code » et la valeur hexadécimale du code de déclenchement est de « B4 ».

La ligne 907 comprend le code de déclenchement d'une extension ou « extension_start_code » et la valeur hexadécimale du code de déclenchement est de « B5 ».

La ligne 908 est réservée et la valeur hexadécimale « B6 » lui est associée.

La ligne 909 comprend le code de fin de séquence ou « sequence_end_code » et la valeur hexadécimale du code de déclenchement est « B7 ».

La ligne 910 comprend le code de déclenchement de groupe d'images ou « groupe_start_code » et la valeur hexadécimale du code de déclenchement est « B8 ».

Ce code est utilisé dans la présente invention et est inséré dans le flux de données pour indiquer la présence d'au moins une unité de NAL comprenant une tranche codée d'une image IDR dans une unité d'accès AU.

La ligne 911 comprend les codes de déclenchement système dont les valeurs hexadécimales sont comprises entre « B9 » et « FF ».

La Fig. 10 représente les différentes valeurs prises par les codes indiquant les différents types d'unités NAL selon le standard IS0/IEC International Standard 14496-10.

Une unité NAL est une structure syntaxique contenant une indication sur le type de données suivantes.

Le tableau de la Fig. 10 comprend une pluralité de type d'unités de couche d'accès réseau NAL représentées dans les lignes 1000 à 1014 de la Fig. 10.

Le tableau de la Fig. 10 comprend deux colonnes 1020 et 1021.

Dans la colonne 1020, sont indiqués les types d'unités NAL.

Dans la colonne 1021, est indiqué pour chaque type d'unité NAL le contenu de l'unité NAL.

La ligne 1000 comprend l'unité NAL de type 0 et dont le contenu n'est pas spécifié.

La ligne 1001 comprend l'unité NAL de type 1 dont le contenu est une tranche codée d'une image de type autre qu'une image IDR ou coded slice of a non-IDR picture en terminologie anglosaxonne.

Ce type de NAL est utilisé dans la présente invention et lorsque celui-ci est détecté, un code de déclenchement est inséré en début de l'unité d'accès AU qui comprend ce NAL.

La ligne 1002 comprend l'unité NAL de type 2 dont le contenu est une partition de type A d'une tranche codée ou coded slice data partition A en terminologie anglosaxonne.

La ligne 1003 comprend l'unité NAL de type 3 dont le contenu est une partition de type B d'une tranche codée ou coded slice data partition B en terminologie anglosaxonne.

La ligne 1004 comprend l'unité NAL de type 4 dont le contenu est une partition de type C d'une tranche codée ou coded slice data partition C en terminologie anglosaxonne.

En effet, une tranche d'image peut être codée en plusieurs partitions A, B et C et peut être classée par ordre d'importance.

La ligne 1005 comprend l'unité NAL de type 5 dont le contenu est une tranche codée d'une image de type IDR ou coded slice of an IDR picture en terminologie anglosaxonne.

Ce type de NAL est utilisé dans la présente invention et lorsque celui-ci est détecté, un code de déclenchement est inséré en début de l'unité d'accès AU qui comprend cette unité NAL.

La ligne 1006 comprend l'unité NAL de type 6 dont le contenu comprend des informations supplémentaires d'amélioration. Ces informations supplémentaires d'amélioration sont utilisées lors du décodage ou lors de l'affichage de la vidéo décodée mais ne sont pas essentielles pour le décodage du flux de données.

La ligne 1007 comprend l'unité NAL de type 7 dont le contenu comprend le groupe de paramètres vidéo, c'est-à-dire l'ensemble de paramètres qui s'appliquent à une séquence vidéo.

La ligne 1008 comprend l'unité NAL de type 8 dont le contenu comprend le groupe de paramètres d'image, c'est-à-dire l'ensemble de paramètres qui s'appliquent à l'image.

La ligne 1009 comprend l'unité NAL de type 9 dont le contenu comprend un délimiteur d'unité d'accès AU. Plus précisément, le délimiteur est un délimiteur de début d'une unité d'accès AU.

La ligne 1010 comprend l'unité NAL de type 10 dont le contenu comprend un délimiteur de fin de séquence d'image.

La ligne 1011 comprend l'unité NAL de type 11 dont le contenu comprend un délimiteur de fin de flux.

La ligne 1012 comprend l'unité NAL de type 12 dont le contenu comprend des données de bourrage.

La ligne 1013 comprend les unités NAL de type 13 à 23 et dont le contenu est réservé.

La ligne 1014 comprend les unités NAL de type 24 à 31 et dont le contenu est non spécifié.

Bien entendu, la présente invention n'est nullement limitée aux modes de réalisation décrits ici, mais englobe, bien au contraire, toute variante à la portée de l'homme du métier.

## Revendications

1. Procédé de traitement d'un flux de données audiovisuelles, le flux de données étant constitué à partir de groupes de données, un groupe de données étant composé d'une suite de sous-groupes de données, un sous-groupe de données comprenant des informations représentatives du type de données comprises dans le sous-groupe de données, **caractérisé en ce que** le procédé comporte les étapes de :
- recherche (E411, E412, E414) parmi les sous-groupes de données d'un groupe de données, d'un type prédéterminé de données comprises dans un sous-groupe de données, le type prédéterminé de données étant représentatif d'un début d'image ou d'un début de séquence d'images,
- association (E402, E403, E405), au groupe de données, d'un code prédéterminé représentatif du type prédéterminé de données présentes dans un sous-groupe de données du groupe de données.

2. Procédé selon la revendication 1, **caractérisé en ce que** les groupes et les sous-groupes de données sont conformes à un premier format de codage de données et le code prédéterminé est conforme à un autre format de codage de données.

3. Procédé selon la revendication 1 ou 2, **caractérisé en ce que** le code prédéterminé est associé au groupe de données en insérant celui-ci en en-tête du groupe de données.

4. Procédé selon la revendication 3, **caractérisé en ce que** le groupe de données et le code prédéterminé inséré sont inclus dans un paquet, et le paquet est décomposé en une pluralité de paquets formant une partie du flux de données audiovisuelles.

5. Procédé selon la revendication 3 ou 4, **caractérisé en ce que** le procédé comporte en outre une étape de mise d'un champ prédéterminé d'une table de programme associée au flux de données audiovisuelles à une valeur prédéterminée.

6. Procédé selon l'une quelconque des revendications 1 à 5, **caractérisé en ce que** lorsque le type prédéterminé de données est représentatif d'un début de séquence d'images, un code prédéterminé représentatif d'un début de séquence d'images et un code prédéterminé représentatif d'un début de groupe d'images sont insérés (E402, E403) en en-tête du groupe de données.

7. Procédé selon l'une quelconque des revendications précédentes, **caractérisé en ce que** lorsque le type prédéterminé de données est représentatif d'un début d'image, un code prédéterminé représentatif d'un début d'image est inséré (E415) en en-tête du groupe de données.

8. Procédé selon l'une quelconque des revendications précédentes, **caractérisé en ce qu'**un groupe de données est une unité d'accès, un sous-groupe de données est une unité de couche d'abstraction réseau, les informations représentatives d'un type prédéterminé de données comprises dans un sous-groupe de données sont une structure syntaxique représentative du type de données de l'unité de couche d'abstraction et le code prédéterminé est un code de déclenchement.

9. Procédé de traitement d'un flux de données audiovisuelles, le flux de données étant constitué à partir de groupes de données, un groupe de données étant composé d'une suite de sous-groupes de données, un sous-groupe de données comprenant des informations représentatives du type de données comprises dans le sous-groupe de données, **caractérisé en ce qu'**à au moins un groupe de données est associé au moins un code prédéterminé représentatif d'un type prédéterminé de données comprises dans un sous-groupe de données du groupe de données et **en ce que** le procédé comporte les étapes de :
- recherche (E702, E704, E705), dans chaque groupe de données d'un code prédéterminé représentatif du type prédéterminé de données présentes dans un sous-groupe de données du groupe de données, le type prédéterminé de données étant représentatif d'un début d'image ou d'un début de séquence ou un groupe d'images,
- suppression (E703) des codes prédéterminés du flux de données.

10. Procédé selon la revendication 9, **caractérisé en ce que** le procédé comporte en outre une étape d'embrouillage des groupes de données ne comprenant pas de code prédéterminé représentatif du type prédéterminé de données présentes dans un sous-groupe de données du groupe de données.

11. Procédé selon la revendication 9, **caractérisé en ce que** le procédé comporte en outre une étape de synchronisation d'un dispositif de traitement pour le traitement du flux de données audiovisuelles à partir ou jusqu'à un groupe de données comprenant un code prédéterminé représentatif du type prédéterminé de données présentes dans un sous-groupe de données du groupe de données.

12. Procédé selon l'une quelconque des revendications 9 à 11, **caractérisé en ce que** les groupes et les sous-groupes de données sont conformes à un premier format de codage de données et le code prédéterminé est conforme à un autre format de codage de données.

13. Procédé selon l'une quelconque des revendications 9 à 12, **caractérisé en ce qu'**au moins un code prédéterminé est placé en en-tête du groupe de données.

14. Procédé selon l'une quelconque des revendications 9 à 13, **caractérisé en ce qu'**un groupe de données est une unité d'accès, un sous-groupe de données est une unité de couche d'abstraction réseau, les informations représentatives d'un type prédéterminé de données comprises dans un sous-groupe de données sont une structure syntaxique représentative du type de données de l'unité de couche d'abstraction réseau et le code prédéterminé est un code de déclenchement.

15. Dispositif de traitement d'un flux de données audiovisuelles, le flux de données étant constitué à partir de groupes de données, un groupe de données étant composé d'une suite de sous-groupes de données, un sous-groupe de données comprenant des informations représentatives du type de données comprises dans le sous-groupe de données, **caractérisé en ce que** le dispositif comporte :
- des moyens de recherche parmi les sous-groupes de données d'un groupe de données, d'un type prédéterminé de données comprises dans un sous-groupe de données, le type prédéterminé de données étant représentatif d'un début d'image ou d'un début de séquence d'images,
- des moyens d'association, au groupe de données, d'un code prédéterminé représentatif du type prédéterminé de données présentes dans un sous-groupe de données du groupe de données.

16. Dispositif de traitement d'un flux de données audiovisuelles, le flux de données étant constitué à partir de groupes de données, un groupe de données étant composé d'une suite de sous-groupes de données, un sous-groupe de données comprenant des informations représentatives du type de données comprises dans le sous-groupe de données, **caractérisé en ce qu'**à au moins un groupe de données est associé au moins un code prédéterminé représentatif d'un type prédéterminé de données comprises dans un sous-groupe de données du groupe de données et **en ce que** le dispositif comporte :
- des moyens de recherche, dans chaque groupe de données d'un code prédéterminé représentatif du type prédéterminé de données présentes dans un sous-groupe de données du groupe de données, le type prédéterminé de données étant représentatif d'un début d'image ou d'un début de séquence ou un groupe d'images,
- des moyens de suppression des codes prédéterminés du flux de données.

17. Signal de données représentatives d'un flux de données audiovisuelles dans lequel le flux de données étant constitué à partir de groupes de données, un groupe de données étant composé d'une suite de sous-groupes de données, un sous-groupe de données comprenant des informations représentatives du type de données comprises dans le sous-groupe de données, **caractérisé en ce que** le signal comporte au moins un code prédéterminé associé à un groupe de données, le code prédéterminé étant représentatif d'un début d'image ou d'un début de séquence ou un groupe d'images dans un sous-groupe de données du groupe de données.

18. Programme d'ordinateur stocké sur un support d'informations, ledit programme comportant des instructions permettant de mettre en oeuvre le procédé de traitement selon l'une quelconque des revendications 1 à 8, lorsqu'il est chargé et exécuté par un système informatique.

19. Programme d'ordinateur stocké sur un support d'informations, ledit programme comportant des instructions permettant de mettre en oeuvre le procédé de traitement selon l'une quelconque des revendications 9 à 14, lorsqu'il est chargé et exécuté par un système informatique.
